# EUROPEAN PATENT SPECIFICATION

(11) **EP 4 170 209 B1**
(45) Date of publication and mention of the grant of the patent: **09.12.2026**
(21) Application number: 22199763.8
(22) Date of filing: 05.10.2022
(51) Int. Cl.: F16K 15/18, F15B 13/01, F15B 13/02, F15B 13/04, F15B 13/10, F15B 13/042, F15B 20/00

(54) **PILOT CHECK VALVE**
PILOTRÜCKSCHLAGVENTIL
CLAPET ANTI-RETOUR PILOTE

(30) Priority: 21.10.2021 JP 2021172329
(43) Date of publication of application: 26.04.2023
(73) Proprietor: SMC Corporation, Tokyo 104-0031 (JP)
(72) Inventor: FUKUSHIMA, Kenji, Ibaraki, 3002493 (JP)
(74) Representative: Keil & Schaafhausen Patentanwälte PartGmbB

(56) References cited:
- JP-A- 2018 009 662
- US-A- 6 131 610
- US-A1- 2020 056 632

## Description

### [Technical Field]

The present invention relates to a pilot check valve having a residual pressure exhaust function that discharges residual pressure in a fluid pressure device such as a fluid pressure cylinder.

### [Background Art]

A pilot check valve according to the related art has been known as described in Patent Literature 1. The pilot check valve includes an input port for connecting to a pressure fluid source, an output port for connecting to a fluid pressure device such as a fluid pressure cylinder, a main path that connects the input port to the output port, and a check valve element that is provided in the main path, allows a flow of a fluid from the input port toward the output port, and can be selectively moved, by supply or discharge of pilot air, between a first position where a flow from the output port toward the input port is blocked and a second position where the flow is allowed.

US 2020/056632 A1 describes a pilot check valve as part of a valve module of a composite valve for a direct attachment to a port of a hydraulic apparatus.

Here, the pilot check valve described in Patent Literature 1 is provided with a residual pressure exhaust unit that can exhaust a pressure fluid (residual pressure) sealed in the fluid pressure device from an exhaust hole to the outside through a residual pressure exhaust path where necessary, when the fluid pressure device stops by any cause. The residual pressure exhaust unit has a valve element that is opened/closed by supply or discharge of pilot air. When pressure of the pilot air is applied, the valve element blocks a flow of a pressure fluid from the output port toward the exhaust hole through the residual pressure exhaust path.

However, in a pilot check valve with a residual pressure exhaust valve according to the related art as described above, since the residual pressure exhaust path is connected to the main path downstream of the check valve element on the output port side, if a failure occurs in the sealing property by the valve element in the residual pressure exhaust unit, in case of an emergency such as stopping of power supply, the pressure fluid that is supposed to be sealed in the fluid pressure device may be exhausted to the outside from the exhaust hole through the residual pressure exhaust path. In such a case, the check function of the check valve element provided in the main path may be lost.

### [Citation List]

### [Patent Literature]

[PTL 1]: Japanese Unexamined Patent Application Publication No. 2018-9662

### [Summary of Invention]

### [Technical Problem]

A technical issue of the present invention is to provide a pilot check valve that is capable of holding there a pressure fluid sealed downstream of a check valve element by a check function of the check valve element in case of an emergency such as stopping of power supply, even if a failure occurs in the sealing property by a valve element in a residual pressure exhaust unit.

### [Solution to Problem]

The present invention provides a pilot check valve including a first body that has an input port and an output port, a main path that is provided in the first body and is in communication with the input port and the output port,
a check valve element that is provided in the main path and allows a flow of a pressure fluid from a first side in communication with the input port toward a second side in communication with the output port, the check valve element being selectively moved, by supply or discharge of a pilot fluid, to a position where a flow from the output port toward the input port is blocked and a position where the flow is allowed, a residual pressure exhaust path having one end connected to a connecting portion formed on the first side of the main path and another end connected to an exhaust hole provided and opened on the first body, a seal portion that is provided in the residual pressure exhaust path and blocks a flow of a pressure fluid from the connecting portion of the main path toward a side of the exhaust hole, and an operation unit that is capable of moving the check valve element to a position where a flow of a pressure fluid from the second side toward the first side in the main path is allowed and moving the seal portion to a position where the flow of a pressure fluid from the connecting portion of the main path in the residual pressure exhaust path toward the exhaust hole is allowed.

In this case, it is preferable that the first body extends in an axial direction, is formed into a cylindrical shape, and has a base end and a leading end at both ends in the axial direction, the first body has a through-hole that extends inside in the axial direction, the first body has a first opening portion that opens in a middle portion of the first body in the axial direction and that is in communication with the input port, and a second opening portion that opens in a base end portion of the first body in the axial direction and that is in communication with the output port, the check valve element is supported and is movable in the axial direction in a base end portion in the axial direction of the through-hole extending in the axial direction, and the operation unit is accommodated in the through-hole further toward a leading end side than the check valve element in the axial direction and is movable in the axial direction.

In addition, it is preferable that the operation unit is a rod member that extends along the through-hole, the rod member has an outer diameter that is smaller than an inner diameter of the through-hole, and the residual pressure exhaust path is formed of a gap formed between an outer peripheral surface of the rod member and an inner peripheral surface of the through-hole.

In addition, it is preferable that the seal portion has a recessed groove that is formed into an annular shape on the outer peripheral surface of the rod member, and a seal member that is accommodated in the recessed groove, and the seal member is a lip-type seal member, the seal member having a lip portion that is formed to be inclined outward in a radial direction toward a base end side in the axial direction.

In addition, it is preferable that a part of the through-hole in communication with the first opening portion and the second opening portion forms a part of the main path, the base end portion in the axial direction of the through-hole extending in the axial direction has a valve seat on which the check valve element is capable of abutting, and the check valve element is capable of moving to a check position where the check valve element abuts on the valve seat and blocks a flow of a pressure fluid from the output port toward the input port, and to a first releasing position where the check valve element moves from the valve seat toward a base end side in the axial direction and allows the flow.

In addition, it is preferable that the rod member is capable of moving in the axial direction inside the through-hole by receiving a force toward a side of the check valve element, when the seal member is moved to a residual pressure exhaust position in the connecting portion, the flow of a pressure fluid from the connecting portion of the main path toward the exhaust hole is allowed, when the check valve element is moved to a second releasing position further toward a base end side in the axial direction than the first releasing position, the flow of a pressure fluid from the second side toward the first side in the main path is allowed, the rod member is capable of moving the seal member to the residual pressure exhaust position by moving in the axial direction, and capable of moving the check valve element to the second releasing position.

In addition, it is preferable that the check valve element is provided with a first return spring that biases the check valve element toward a side of the valve seat, and the rod member is provided with a second return spring that biases the rod member toward a base end side in the axial direction.

In addition, it is preferable that the through-hole has an exhaust valve chamber on a leading end side in the axial direction, the exhaust valve chamber is provided with a piston inside the exhaust valve chamber, the piston dividing the exhaust valve chamber into a pressure chamber and a discharge chamber and being capable of sliding inside the through-hole, and the first body has a pilot port that introduces pilot pressure into the pressure chamber, and the exhaust hole that is located between the seal member and the piston and is in communication with the discharge chamber and an outside.

In addition, it is preferable that the rod member further has a piston rod that is disposed on a leading end side in the axial direction of the rod member and that is provided to be movable along the through-hole, the piston rod has a base end portion in the axial direction inserted and movable in the axial direction with respect to the piston, and when the piston rod is pressed from a third opening portion that opens at the leading end in the axial direction of the first body toward a base end side in the axial direction, the piston rod is capable of pressing the rod member to move the rod member to the base end side in the axial direction and moving the seal member to the residual pressure exhaust position and capable of moving the check valve element to the second releasing position.

In addition, it is preferable that when the axial direction is an X-axis direction, a direction orthogonal to the X-axis direction is a Z-axis direction, and a direction orthogonal to the X-axis direction and the Z-axis direction is a Y-axis direction, the first body extends in the X-axis direction, the first body is connected, on a base end side in the X-axis direction, to a second body that extends in the Z-axis direction orthogonal to the X-axis direction and that includes the output port at one end, the first body is connected, in a leading end portion in the X-axis direction, to a pilot body that is fitted around an outer periphery of the first body to be rotatable around the X-direction with respect to the first body, the first body is connected to a connecting pipe portion that is fitted around an outer periphery of the first body and rotatable around the X-axis direction further toward a base end side in the X-axis direction than the pilot body, the connecting pipe portion is connected to an annular body that is coupled and rotatable in the Y-axis direction orthogonal to the X-axis direction and the Z-axis direction, and the second body is connected to a cylindrical coupling portion that is fitted to an outer periphery of the second body and rotatable in the Z-axis direction and couples a base end portion of the first body to the second body.

### [Advantageous Effects of Invention]

According to the present invention, it is possible to provide a pilot check valve that is capable of holding there a pressure fluid sealed downstream of a check valve element by a check function of the check valve element in case of an emergency such as stopping of power supply, even if a failure occurs in the sealing property by a valve element in a residual pressure exhaust unit.

### [Brief Description of Drawings]

[Fig. 1] Fig. 1 is a perspective view of a pilot check valve according to an embodiment of the present invention.
[Fig. 2] Fig. 2 is a side view of the pilot check valve.
[Fig. 3] Fig. 3 is a sectional view of the pilot check valve along line III-III of Fig 2.
[Fig. 4] Fig. 4 is a partial perspective view of a check valve main body.
[Fig. 5] Fig. 5 is a partial sectional view of the pilot check valve in a state where a piston rod is pressed by pilot pressure.
[Fig. 6] Fig. 6 is a partial sectional view of the pilot check valve in a state where a pressing operation is performed on the piston rod.
[Fig. 7] Fig. 7 is a circuit configuration diagram of an air pressure circuit using the pilot check valve and illustrates a state where a pressure fluid is blocked.
[Fig. 8] Fig. 8 is a circuit configuration diagram when a pressure fluid is supplied and a fluid pressure cylinder is extended from the state in FIG. 7.
[Fig. 9] Fig. 9 is a circuit configuration diagram when a pressure fluid is supplied and the fluid pressure cylinder is contracted from the state in FIG. 7.

### [Description of Embodiments]

Hereinafter, a pilot check valve according to the present invention will be described. In the present embodiment, a pilot check valve including three ports of an input port, an output port, and a pilot port and capable of holding residual pressure in a fluid pressure cylinder will be described. Here, a case in which a pressure fluid flowing through the pilot check valve is compressed air will be described.

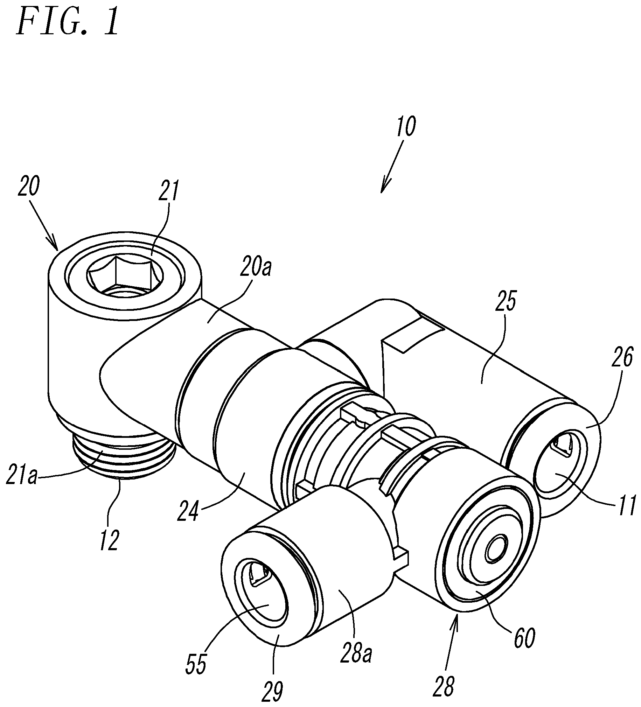

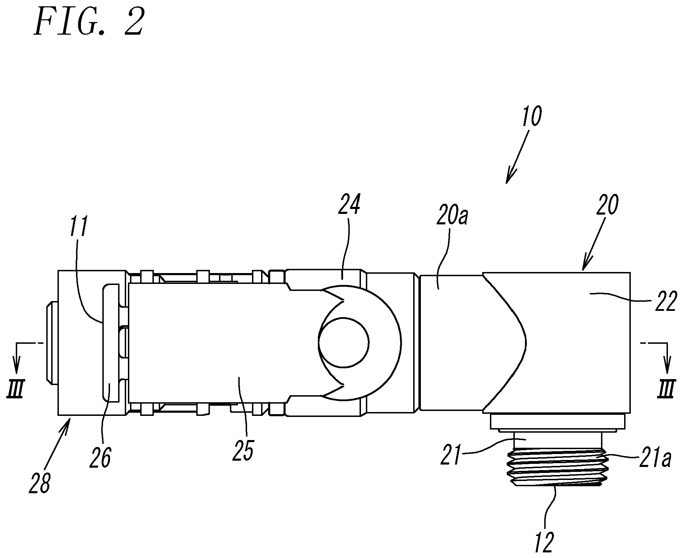

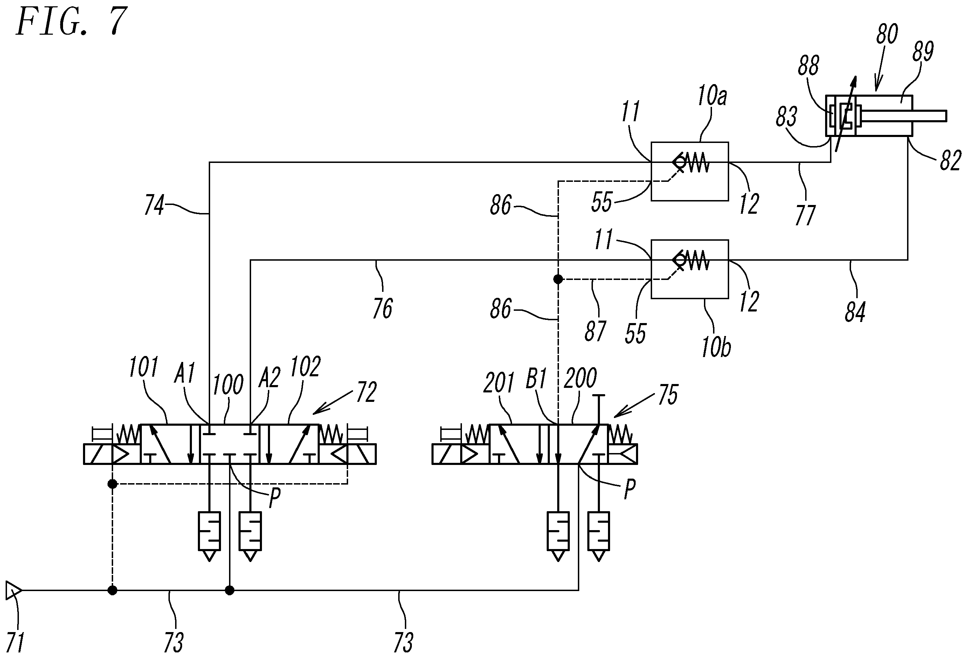

Figs. 1 to 6 illustrate an embodiment of the pilot check valve according to the present invention. A pilot check valve 10 has an input port 11 that is connected to solenoid switching valves 72 and 75 (see Fig. 7), an output port 12 that is connected to a fluid pressure device such as a fluid pressure cylinder 80 (see Fig. 7), a main path 13 that connects the input port 11 and the output port 12, a check valve element 14 that is provided in the middle of the main path 13 and allows a flow of a pressure fluid from a first side in communication with the input port 11 toward a second side in communication with the output port 12, a residual pressure exhaust path 15 that is provided further toward the input port 11 side than the check valve element 14, a seal member 48 that is provided on the residual pressure exhaust path 15 so as to be movable and that blocks a flow from the output port 12 side toward the residual pressure exhaust path 15 side, and a pilot port 55 that introduces a pilot fluid.

The output port 12 is provided at a base end 18b in a direction of an axis L1 of a body 18 having a substantially cylindrical shape elongated along the first axis L1. The body 18 is provided with an attachment portion 24 that is fitted to an outer periphery of the body 18 so as to be rotatable around the axis L1. The attachment portion 24 is provided with a connecting pipe portion 23 that projects in a direction of a third axis L3 orthogonal to the first axis L1 and a second axis L2 described later. The connecting pipe portion 23 is provided with an annular body 25 that is coupled so as to be rotatable around the axis L3, and the input port 11 is provided in a leading end portion in an extending direction of the annular body 25. Details of the attachment portion 24, the connecting pipe portion 23, and the annular body 25 will be described later.

In addition, a check valve body 20 that has a substantially cylindrical shape and extends along the second axis L2 orthogonal to the first axis L1 is attached to a base end portion of the body 18. The output port 12 opens in one end portion (lower end portion) in a direction of the axis L2 of a main body 21 (second body) provided inside the check valve body 20.

In addition, in a middle portion of the body 18 in the direction of the axis L1, the connecting pipe portion 23 that is fitted to an outer periphery of the body 18 is provided. The connecting pipe portion 23 is formed into a cylindrical shape that projects from a side surface of the body 18 and extends along the third axis L3 orthogonal to the first and second axes L1 and L2. The annular body 25 is attached to the connecting pipe portion 23, and the input port 11 is provided in a port block 26 that is connected to one end portion of the annular body 25.

The body 18 has a pilot body 28 having a substantially cylindrical shape, fitted to an outer periphery of a leading end 18a of the body 18, and extending along the first axis L1. The pilot port 55 is provided in a port block 29 connected to a port forming portion 28a formed in the pilot body 28 and having a cylindrical shape.

The main path 13 is formed so as to reach from the input port 11 to the output port 12 of the main body 21 through the annular body 25, the connecting pipe portion 23, the inside of the body 18, and the check valve body 20. The body 18, the check valve body 20, the connecting pipe portion 23, the annular body 25, and the pilot body 28 can be formed with a metal material such as an aluminum alloy, a synthetic resin material, or the like.

Hereinafter, a configuration of the pilot check valve 10 will be described in further detail. First, the connecting pipe portion 23 has the attachment portion 24 having a cylindrical shape formed in a base end portion in the direction of the axis L3 of the connecting pipe portion 23. The attachment portion 24 is fitted to an outer peripheral surface of the body 18 via two O-rings 24a on an inner surface of the attachment portion 24 so that the attachment portion 24 and the body 18 are airtightly attached to each other.

The annular body 25 forms an elbow shape and is attached airtightly to the connecting pipe portion 23 provided on a side surface of the body 18 via an O-ring 25a so as to be rotatable in forward and reverse directions around the center axis (the third axis L3) of the connecting pipe portion 23. The input port 11 is formed in the port block 26 attached to a leading end of the annular body 25. In addition, a second path hole 25b in the annular body 25 is in communication with a connecting hole 23a in the connecting pipe portion 23. The center axis of the connecting pipe portion 23, that is, the third axis L3 is orthogonal to both of the first axis L1 and the second axis L2, and the input port 11 opens in a direction orthogonal to the third axis L3.

As an insertion portion 18c at a base end of the body 18 is inserted, via a seal member 31, from an opening end portion side of the connecting portion 20a that opens on a side surface of the check valve body 20, the body 18 is airtightly attached in a state of closing an opening end portion of the check valve body 20. The body 18 has a through-hole 18d extending in the direction of the axis L1 in the body 18.

The check valve body 20 has the main body 21 having a cylindrical shape whose center axis is the second axis L2 and a cylindrical coupling portion 22 fitted to an outer periphery of the main body 21. The cylindrical coupling portion 22 is fitted to the main body 21 via an O-ring (not illustrated) on an inner surface of the cylindrical coupling portion 22 so as to be rotatable with respect to the main body 21, as a result of which the cylindrical coupling portion 22 is coupled to the main body 21 so as to be rotatable in both forward and reverse directions around the second axis L2. Therefore, the body 18, the annular body 25, the pilot body 28, and the like are rotatable around the second axis L2 with respect to the main body 21.

In the main body 21, at a position of one end portion (lower end portion) of the second axis L2 of the main body 21, a connecting portion 21a that is directly fitted and connected to an attachment hole of a fluid pressure device is formed, the output port 12 is formed inside the connecting portion 21a, and a recess and a projection are provided on an outer periphery of the connecting portion 21a. Note that the connecting portion 21a may be a male screw, and may also be configured to be connected to the fluid pressure device via a pipe. In addition, in the main body 21, a second flow hole 21b extending in the direction of the axis L2 from the output port 12 is formed, and a plurality of branch holes 21c in communication with the second flow hole 21b and extending in a radial direction is also formed. The plurality of branch holes 21c is in communication with a second annular path 20b formed between an inner periphery of the cylindrical coupling portion 22 and an outer periphery of the main body 21, the second annular path 20b is in communication with a third communication hole 20c formed in the cylindrical coupling portion 22 of the check valve body 20.

In the insertion portion 18c, a check valve chamber 33 that is a part of the through-hole 18d and extends in the direction of the axis L1 is formed. The check valve chamber 33 is in communication with the third communication hole 20c of the check valve body 20. A spring support portion 34 is inserted and attached to a base end portion of the check valve chamber 33 in the direction of the axis L1. The spring support portion 34 is formed into a columnar shape, a communication hole 34a (second opening portion) that passes through the spring support portion 34 in the direction of the axis L1 is formed inside the spring support portion 34, and a plurality of cut-away holes 34b provided at an interval in a circumferential direction is formed on an outer peripheral portion of the spring support portion 34. In addition, in a base end portion of the spring support portion 34 in the direction of the axis L1, a step portion 34c projecting outward in a radial direction and annularly extending is formed, and one end portion of a first return spring 36 abuts on the step portion 34c and is locked.

A first annular path 32 (first opening portion) that surrounds the body 18 is formed between an inner peripheral surface of the attachment portion 24 of the connecting pipe portion 23 attached to the body 18 and the outer peripheral surface of the body 18. The first annular path 32 is in communication with the connecting hole 23a of the connecting pipe portion 23 and is also in communication with a plurality of first communication holes 35 extending in a radial direction in the body 18. The first communication holes 35 are in communication with the check valve chamber 33 adjacent to a central hole 37 through the central hole 37 (connecting portion) formed in a central portion of the body 18 and extending in the direction of the axis L1. The central hole 37 forms a part of the through-hole 18d. A valve seat 38 having an annular shape and surrounding the central hole 37 is formed on a boundary between the check valve chamber 33 and the central hole 37.

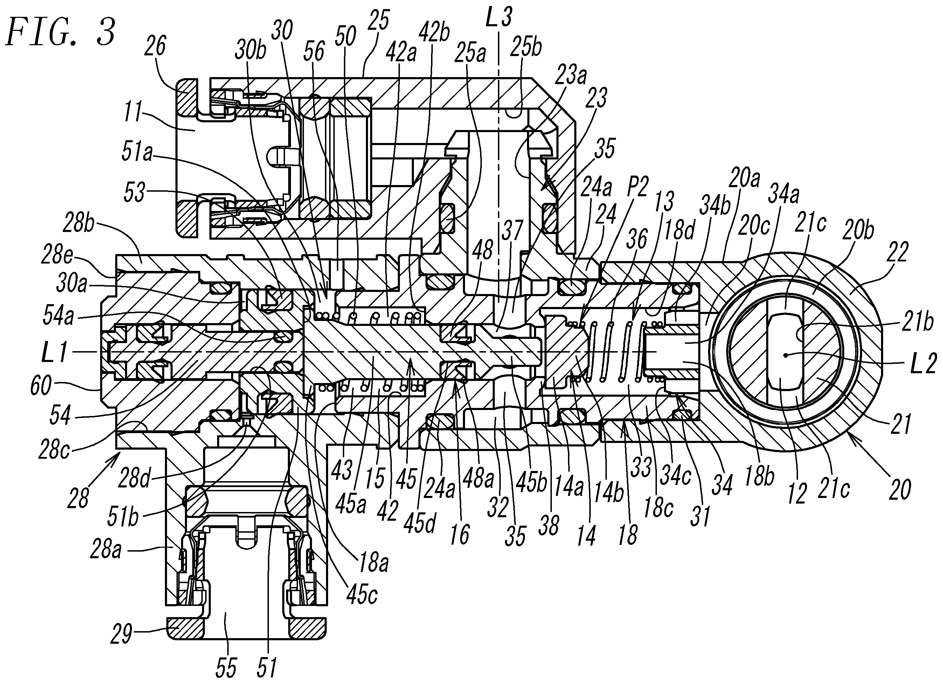

In the check valve chamber 33, the check valve element 14 is supported by the first return spring 36 attached between the check valve element 14 and the spring support portion 34, and thus the check valve element 14 is provided so as to be displaceable in the direction of the axis L1. The check valve element 14 is formed having a valve plate portion 14a having a disk shape and a projection portion 14b projecting from a leading end of the valve plate portion 14a in the direction of the axis L2. One end portion of the first return spring 36 is locked to the spring support portion 34, and another end portion of the first return spring 36 is locked to the projection portion 14b. The check valve element 14 opens and closes the main path 13 connecting the input port 11 and the output port 12 as the valve plate portion 14a comes into contact with and is separated from the valve seat 38. By the first return spring 36, the check valve element 14 is always biased toward a check position (see Fig. 3) where the check valve element 14 is seated on the valve seat 38.

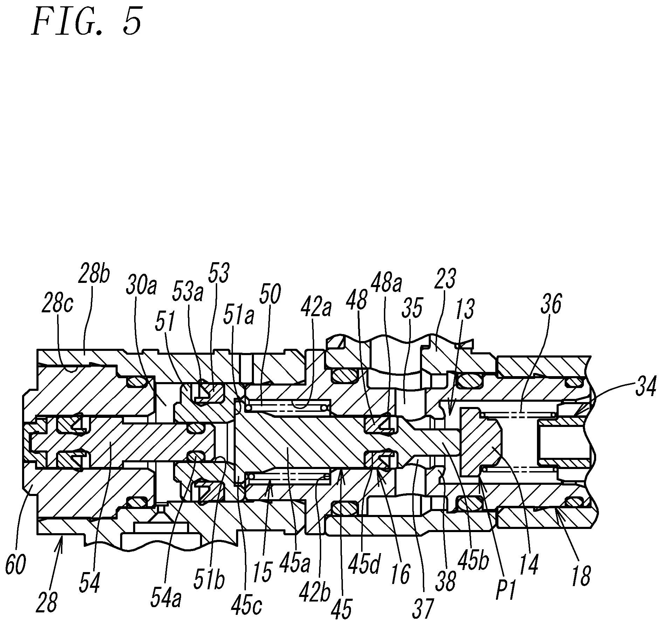

With respect to a flow in a forward direction of a pressure fluid from the input port 11 toward the output port 12 side through the main path 13, the check valve element 14 is pushed by this flow, moves to a first releasing position P1 (see Fig. 5) where the check valve element 14 is separated from the valve seat 38 while compressing the first return spring 36, and releases the main path 13 to allow the flow of the pressure fluid in the forward direction. On the other hand, with respect to a flow in a reverse direction, which is a flow from the output port 12 toward the input port 11 side, the check valve element 14 is pushed by this flow and a biasing force of the first return spring 36, moves to a check position P2 (see Fig. 3) where the check valve element 14 is seated on the valve seat 38, and closes the main path 13 to block the flow of the pressure fluid in the reverse direction. That is, the state of the check valve element 14 described above is a state of "function turned on" in which the check valve element 14 can exhibit its original check function.

In the body 18, a residual pressure exhaust valve hole 42 that is a part of the through-hole 18d, is in communication with the central hole 37, and extends toward a base end side in the direction of the axis L1 is formed, and in the residual pressure exhaust valve hole 42, a push rod 45 (operation unit) is accommodated so as to be slidable in the direction of the axis L1. A gap 43 through which air can pass is formed between an outer surface of the push rod 45 and an inner surface of the residual pressure exhaust valve hole 42, and the gap 43 forms a residual pressure exhaust path 15 extending in the direction of the axis L1. The residual pressure exhaust path 15 is in communication with the central hole 37. That is, the residual pressure exhaust path 15 extends from the central hole 37 to the leading end side in the direction of the axis L1.

The push rod 45 has a rod portion 45a and a pressing portion 45b having a small-diameter shaft shape and extending from a base end in the direction of the axis L1 of the rod portion 45a, and a leading end of the pressing portion 45b faces the check valve element 14 in the central hole 37. A ring groove 45d (seal portion) is formed into an annular shape in a leading end portion of the rod portion 45a, and a seal member 48 (seal portion) is accommodated in the ring groove 45d.

The seal member 48 is formed into an annular shape and has a lip portion 48a that is inclined outward in a radial direction toward the leading end side in the direction of the axis L1. A leading end portion of the lip portion 48a is pressed against an inner surface of the residual pressure exhaust valve hole 42, closes the residual pressure exhaust path 15, and blocks a flow of a pressure fluid from the leading end side to the base end side in the direction of the axis L1. That is, in a state where the seal member 48 is pressed against the inner surface of the residual pressure exhaust valve hole 42, the residual pressure exhaust path 15 is blocked. When the seal member 48 is displaced as the push rod 45 moves toward the base end side in the axis direction and the seal member 48 moves to a residual pressure exhaust position P3 where the central hole 37 is located, the lip portion 48a is separated from a base end in the axis direction of the residual pressure exhaust valve hole 42 and opens the residual pressure exhaust path 15. At the same time, the lip portion 48a is accommodated in the central hole 37 in a state where a flow of the pressure fluid is possible without closing the central hole 37 (see Fig. 5).

A flange portion 45c projecting outward in a radial direction and having an annular shape is formed in a leading end portion in the direction of the axis L1 of the rod portion 45a of the push rod 45. In addition, a spring accommodating groove 42a having an inner diameter larger than the outer diameter of the rod portion 45a is formed on a leading end side in the direction of the axis L1 of the residual pressure exhaust valve hole 42, and a step portion 42b extending in a radial direction and having an annular shape is formed at a base end in the direction of the axis L1 of the spring accommodating groove 42a. In addition, a second return spring 50, which is a compression coil spring, is provided between the flange portion 45c and the step portion 42b of the spring accommodating groove 42a in a state where the rod portion 45a is inserted into the second return spring 50 and the second return spring 50 is accommodated in the spring accommodating groove 42a. By the second return spring 50, the push rod 45 is always biased toward the leading end side in the direction of the axis L1. Note that an outer diameter of the flange portion 45c is slightly smaller than an inner diameter of the spring accommodating groove 42a. Accordingly, the flange portion 45c can move inside the spring accommodating groove 42a in the direction of the axis L1.

The pilot body 28 attached to a leading end portion of the body 18 has an attachment portion 28b having a cylindrical shape and attached to an outer peripheral surface of a base end portion of the body 18, and a port forming portion 28a having an annular shape and projecting from a side surface of the attachment portion 28b. By fitting a locking step portion having an annular shape formed in the leading end portion of the body 18 into a recessed groove annularly shaped on an inner peripheral surface of the attachment portion 28b, the pilot body 28 is attached so as to be prevented from coming off the body 18 and rotatable around the axis L1.

In the inner peripheral surface of the attachment portion 28b, a residual pressure exhaust communication hole 28c in communication with the residual pressure exhaust valve hole 42 is formed in the direction of the axis L1. An inner diameter of the residual pressure exhaust communication hole 28c is larger than that of the residual pressure exhaust valve hole 42, and an exhaust valve chamber 30 is formed inside the residual pressure exhaust communication hole 28c. In the exhaust valve chamber 30, a piston 51 that divides the exhaust valve chamber 30 into a pressure chamber 30a and an exhaust chamber 30b and that is capable of sliding in the direction of the axis L1 inside the residual pressure exhaust communication hole 28c is provided. A gap through which air can pass is formed between an outer surface of the piston 51 on an outer side in a radial direction and an inner surface of the residual pressure exhaust communication hole 28c. The gap forms the residual pressure exhaust path 15 (see Fig. 5) extending in the direction of the axis L1. The residual pressure exhaust path 15 is in communication with the pressure chamber 30a and the exhaust chamber 30b.

A recessed groove having an annular shape extending in a circumferential direction is formed on an outer peripheral surface of the piston 51, and a seal member 53 that seals a space between the outer peripheral surface of the piston 51 and an inner peripheral surface of the residual pressure exhaust communication hole 28C is attached inside the recessed groove. The seal member 53 has a lip-type structure similar to the seal member 48 described above, but differs in the direction of the lip portion 48a. A lip portion 53a of the seal member 53 is inclined outward in a radial direction toward the leading end side in the direction of the axis L1. As a result, the lip portion 53a allows a flow of a pressure fluid from the base end side toward the leading end side in the direction of the axis L1 while blocking a flow of a pressure fluid from the leading end side to the base end side in the direction of the axis L1.

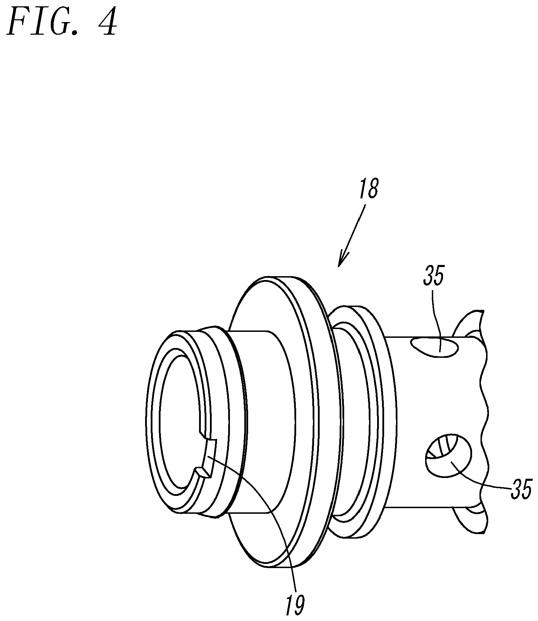

A recessed groove 51a that is recessed toward the leading end side is formed in a base end portion of the piston 51, and the flange portion 45c of the push rod 45 is accommodated in the recessed groove 51a in a state of abutting on the recessed groove 51a. The depth of the recessed groove 51a is substantially the same as the thickness of the flange portion 45c. A base end surface of the piston 51 is formed into an annular shape around the axis L1 and extends in a direction orthogonal to the direction of the axis L1. When the base end surface of the piston 51 abuts on a leading end surface of the body 18, these surfaces abut on each other so that a space therebetween becomes airtight, thereby blocking the residual pressure exhaust path 15. Therefore, a cut-away hole 19 illustrated in Fig. 4 is provided in the leading end portion of the body 18. With the cut-away hole 19, the residual pressure exhaust path 15 can be brought into a communication state even when the base end surface of the piston 51 abuts on the leading end surface of the body 18.

In a central portion of the piston 51, a through-hole 51b that passes through the piston 51 in the direction of the axis L1 is provided. By fitting a base end portion of the piston rod 54 into the through-hole 51b via an O-ring 54a attached to the base end portion of the piston rod 54 in the direction of the axis L1, the piston rod 54 is airtightly attached to the through-hole 51b of the piston 51. Note that the piston rod 54 is fitted to the through-hole 51b of the piston 51 so as to be slidable in the direction of the axis L1 (see Fig. 5).

A cover member 60 having a cylindrical shape is attached to the residual pressure exhaust communication hole 28c on a leading end side of the attachment portion 28b. The cover member 60 is inserted from an opening portion 28e (third opening portion) that opens at a leading end of the residual pressure exhaust communication hole 28c in the axis direction and is fitted to the residual pressure exhaust communication hole 28c via an O-ring 61 attached to a base end portion in the direction of the axis L1 of the cover member 60, as a result of which the cover member 60 is airtightly attached to the residual pressure exhaust communication hole 28c. In addition, a plurality of step portions is formed on an outer peripheral surface of the cover member 60. As the step portions are caused to abut on engagement steps formed on an inner surface of the residual pressure exhaust communication hole 28c, the cover member 60 is attached to the attachment portion 28b in a state where the position of the cover member 60 is determined in the direction of the axis L1. Moreover, as locking projections formed on the outer peripheral surface of the cover member 60 are caused to be engaged with engagement recessed portions formed on the inner surface of the residual pressure exhaust communication hole 28c, the cover member 60 is attached to the attachment portion 28b in a state where the cover member 60 can be prevented from coming off.

The port forming portion 28a formed on a side surface of the attachment portion 28b is formed into a cylindrical shape extending in a direction orthogonal to the axis L1, and the pilot port 55 is formed in the port block 29 inserted into an opening portion on one end side of the port forming portion 28a. A communication hole 28d is formed in a bottom portion of the port forming portion 28a, and the communication hole 28d is in communication with the pressure chamber 30a. The communication hole 28d is an orifice whose cross-sectional area is decreased, and pilot pressure to be introduced into the pressure chamber 30a can be increased.

In addition, an exhaust hole 56 in communication with the exhaust chamber 30b is formed in the attachment portion 28b. The exhaust hole 56 discharges air in the exhaust chamber 30b to the outside as the piston 51 moves toward the leading end side in the direction of the axis L1, and at the same time, the exhaust hole 56 can discharge residual pressure in a fluid pressure cylinder 80 (see Fig. 7), as will be described in detail later.

In the pilot check valve 10 configured as described above, when a pilot fluid is introduced from the pilot port 55 to the pressure chamber 30a, the piston 51 is pressed toward the base end side in the direction of the axis L1, the push rod 45 is moved toward the base end side against the bias of the second return spring 50, and in addition, a leading end portion of the push rod 45 abuts on the check valve element 14, and the valve element 14 is moved toward the base end side in the direction of the axis L1 against the bias of the first return spring 36. Note that in this state, the seal member 48 is located further toward the base end side in the direction of the axis L1 than the central hole 37 and closes the residual pressure exhaust path 15. Accordingly, since the check valve element 14 is separated from the valve seat 38 and releases the main path 13, a flow of a pressure fluid from the input port 11 toward the output port 12 side is allowed.

Next, a fluid pressure circuit in a case where a fluid pressure device (the fluid pressure cylinder 80) is controlled using the pilot check valve 10 will be described.

Fig. 7 illustrates an example of a fluid pressure circuit in a case where the fluid pressure cylinder 80, which is an example of a fluid pressure device, is controlled. The fluid pressure circuit supplies a pressure fluid discharged from a pressure fluid source 71 to the two solenoid switching valves 72 and 75, and pilot check valves 10a and 10b are connected between the fluid pressure cylinder 80 and the two solenoid switching valves 72 and 75, respectively. The two pilot check valves 10a and 10b have the same configuration. In addition, one of the two solenoid switching valves 72 and 75 is the direction switching solenoid valve 72 that switches an expansion direction of the fluid pressure cylinder 80, and the other is the pilot pressure supply solenoid valve 75 that supplies pilot pressure to the pilot check valves 10a and 10b. The direction switching solenoid valve 72 is a three-position five-port type switching valve. The pilot pressure supply solenoid valve 75 is a two-position five-port type switching valve. The solenoid valves 72 and 75 have a detent function capable of holding switching positions (101, 102, and 201).

Hereinafter, the fluid pressure circuit will be described in further detail. Figs. 1 to 6 are referred to for specific configurations of the symbolized two pilot check valves 10a and 10b.

As illustrated in Fig. 7, input ports P of the direction switching solenoid valve 72 and the pilot pressure supply solenoid valve 75 are connected to the pressure fluid source 71 through a supply path 73. A first output port A1 of the direction switching solenoid valve 72 is connected to the input port 11 of the first pilot check valve 10a through a first output path 74, and a second output port A2 of the direction switching solenoid valve 72 is connected to the input port 11 of the second pilot check valve 10b through a second output path 76. In addition, the output port 12 of the first pilot check valve 10a is connected to a head-side port 83 of the fluid pressure cylinder 80 through a first communication path 77, and the output port 12 of the second pilot check valve 10b is connected to a rod-side port 82 of the fluid pressure cylinder 80 through a second communication path 84.

Moreover, the pilot port 55 of the first pilot check valve 10a is connected to a first output port B1 of the pilot pressure supply solenoid valve 75 through a first pilot supply path 86, and the pilot port 55 of the second pilot check valve 10b is connected to the first output port B1 through a second pilot supply path 87 and the first pilot supply path 86. The second pilot supply path 87 branches off from the first pilot supply path 86 and is connected to the pilot port 55 of the second pilot check valve 10b.

The fluid pressure circuit illustrated in Fig. 7 indicates a state in which since the pressure fluid source 71 is blocked from the fluid pressure circuit, a pressure fluid is not supplied, the direction switching solenoid valve 72 is located at an initial position that holds a neutral position 100, and the pilot pressure supply solenoid valve 75 is located at an initial position that holds a first switching position 200 where pilot pressure is not supplied. At this time, since pilot fluid is not supplied, the check valve elements 14 of both of the first pilot check valve 10a and the second pilot check valve 10b are in the state of "function turned on" in which the check valve elements 14 can exhibit the check function, and the seal member 48 closes the residual pressure exhaust path 15 (see Fig. 3). Accordingly, since the main path 13 is closed by the check valve elements 14 of the first pilot check valve 10a and the second pilot check valve 10b, pressure fluids in a head-side pressure chamber 88 and a rod-side pressure chamber 89 of the fluid pressure cylinder 80 are sealed as they are.

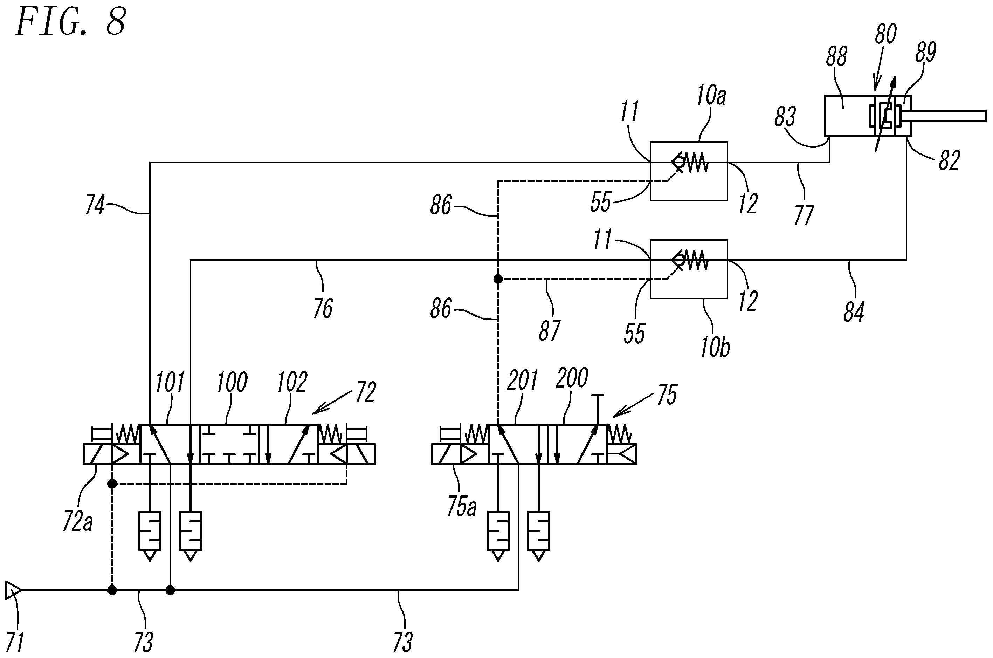

From the state described above, as illustrated in Fig. 8, when the pressure fluid source 71 is connected to the fluid pressure circuit, and the direction switching solenoid valve 72 is switched to a first switching position 101 after a first solenoid 72a of the direction switching solenoid valve 72 is excited, a pressure fluid from the pressure fluid source 71 is supplied to the input port P of the direction switching solenoid valve 72 through the supply path 73, and, at the same time, is supplied to the input port 11 of the first pilot check valve 10a through the first output path 74.

In addition, when the pressure fluid source 71 is connected to the fluid pressure circuit, and the pilot pressure supply solenoid valve 75 is switched to a second switching position 201 after a first solenoid 75a of the pilot pressure supply solenoid valve 75 is excited, a pressure fluid from the pressure fluid source 71 is supplied to the input port P of the pilot pressure supply solenoid valve 75 through the supply path 73 and is supplied to the pilot port 55 of the first pilot check valve 10a through the first pilot supply path 86. Accordingly, the first pilot check valve 10a enters a state of "function turned off" in which the first pilot check valve 10a introduces a pilot fluid from the pilot port 55 into the pressure chamber 30a, moves the push rod 45 via the piston 51, and opens the main path 13 by the check valve element 14 (see Fig. 5).

As a result, the pressure fluid supplied to the input port 11 of the first pilot check valve 10a is discharged from the output port 12 through the main path 13 of the first pilot check valve 10a and introduced into the head-side pressure chamber 88 of the fluid pressure cylinder 80.

On the other hand, in the second pilot check valve 10b, as a pilot fluid is supplied to the pilot port 55 from the first pilot supply path 86 through the second pilot supply path 87, the second pilot check valve 10b enters the state of "function turned off", and the main path 13 is opened. Accordingly, the pressure fluid in the rod-side pressure chamber 89 of the fluid pressure cylinder 80 is discharged to the outside through the second communication path 84, the output port 12 of the second pilot check valve 10b, the main path 13, the input port 11, the second output path 76, and the direction switching solenoid valve 72. As a result, the fluid pressure cylinder 80 extends as illustrated in Fig. 8.

Next, for holding the extended state of the fluid pressure cylinder 80, as illustrated in Fig. 7, the direction switching solenoid valve 72 is switched to the neutral position 100, and the pilot pressure supply solenoid valve 75 is also switched to the first switching position 200. When the direction switching solenoid valve 72 is switched to the neutral position 100 and the pilot pressure supply solenoid valve 75 is also switched to the first switching position 200, the check valve element 14 of the first pilot check valve 10a is pushed by a pressure fluid that is trying to flow in a reverse direction and a return movement of the first return spring 36 and thus is seated on the valve seat 38, and closes the main path 13 so as to exhibit the check function. Therefore, the pressure fluid in the head-side pressure chamber 88 of the fluid pressure cylinder 80 is sealed in the head-side pressure chamber 88 as it is. In addition, the pressure fluid in the rod-side pressure chamber 89 of the fluid pressure cylinder 80 is also sealed in the rod-side pressure chamber 89 as it is. Therefore, the fluid pressure cylinder 80 is held at the extended position.

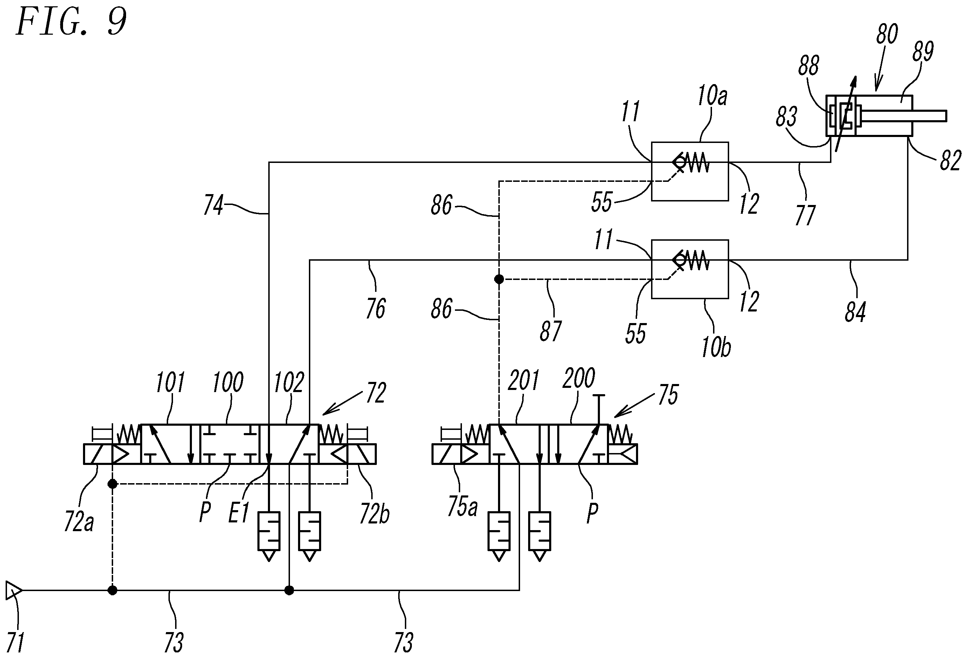

In addition, for contracting the fluid pressure cylinder 80, as illustrated in Fig. 9, a second solenoid 72b of the direction switching solenoid valve 72 is excited so as to switch the direction switching solenoid valve 72 to the second switching position 102, and the first solenoid 75a of the pilot pressure supply solenoid valve 75 is also excited so as to switch the pilot pressure supply solenoid valve 75 to the second switching position 201. As a result, actions of the first pilot check valve 10a and the second pilot check valve 10b are mutually reversed from the case of extending the fluid pressure cylinder 80, a pressure fluid is supplied from the direction switching solenoid valve 72 to the rod-side pressure chamber 89 of the fluid pressure cylinder 80 through the second pilot check valve 10b, and at the same time, the pressure fluid in the head-side pressure chamber 88 is discharged from the first pilot check valve 10a through a first discharge port E1 of the direction switching solenoid valve 72, and the fluid pressure cylinder 80 is contracted and returns to the initial position.

The above description is an example of a case where the fluid pressure circuit normally operates. However, in an abnormal situation such as a case in which the fluid pressure cylinder 80 is extended as in Fig. 8, power feeding to the direction switching solenoid valve 72 and the pilot pressure supply solenoid valve 75 is interrupted, and a failure occurs in the seal property of the seal member 48 of the first pilot check valve 10a, thereby losing the check function, supply of a pilot fluid from the pilot port 55 is stopped, and introduction of a compressed fluid from the input port 11 is also stopped. Therefore, the push rod 45 moves toward the leading end side in the direction of the axis L1 by a return movement of the second return spring 50 and the pressure fluid flowing through the residual pressure exhaust path 15.

As a result, since the push rod 45 is moved toward the leading end side in the direction of the axis L1, the check valve element 14 illustrated in Fig. 3 is pushed by a pressure fluid trying to flow in a reverse direction and a return movement of the first return spring 36 and is seated on the valve seat 38, and enters the state of "function turned on" in which the check valve element 14 closes the main path 13 and exhibits the check function. As a result, the pressure fluid in the head-side pressure chamber 88 of the fluid pressure cylinder 80 can be sealed in the head-side pressure chamber 88 as it is.

On the other hand, since the second pilot check valve 10b is also in a state where power feeding is interrupted, no pilot fluid is supplied. Therefore, since the push rod 45 is pressed by a return movement of the second return spring 50 and is moved toward the leading end side in the direction of the axis L1, the check valve element 14 illustrated in Fig. 3 is pushed by a pressure fluid trying to flow in a reverse direction and a return movement of the first return spring 36 and is seated on the valve seat 38, and enters the state of "function turned on" in which the check valve element 14 closes the main path 13 and exhibits the check function. Therefore, the pressure fluid in the rod-side pressure chamber 89 of the fluid pressure cylinder 80 can be sealed in the rod-side pressure chamber 89 as it is.

As a result, since the fluid pressure cylinder 80 is maintained at the extended position, malfunction of the fluid pressure device connected to the fluid pressure cylinder 80 can be prevented. Note that even when a failure occurs in the sealing property of the seal member 48 of the second pilot check valve 10b, or when a failure occurs in the sealing property of each of the seal members 48 of both of the first and second pilot check valve 10a and 10b, since the case in which the seal member 48 of the first pilot check valve 10a is damaged as described above applies, the description thereof will be omitted.

In this manner, since the pilot check valves 10a and 10b of the present embodiment are configured to exhibit the check function in which the check valve element 14 closes the main path 13 in case of an emergency such as stopping of power supply to the direction switching solenoid valve 72 and the pilot pressure supply solenoid valve 75 even when a failure occurs in the sealing property by the seal member 48, pressure fluid (residual pressure) is able to be held as it is in each of the head-side and rod-side pressure chambers 88 and 89 of the fluid pressure cylinder 80.

Here, when it is desired to exhaust the residual pressure held in the fluid pressure cylinder 80 from the fluid pressure cylinder 80, in a state where the direction switching solenoid valve 72 is switched to the neutral position 100 and the pilot pressure supply solenoid valve 75 is switched to the first switching position 200, as illustrated in Fig. 5, each piston rod 54 of the pilot check valves 10a and 10b shall be pressed toward the base end side in the direction of the axis L1.

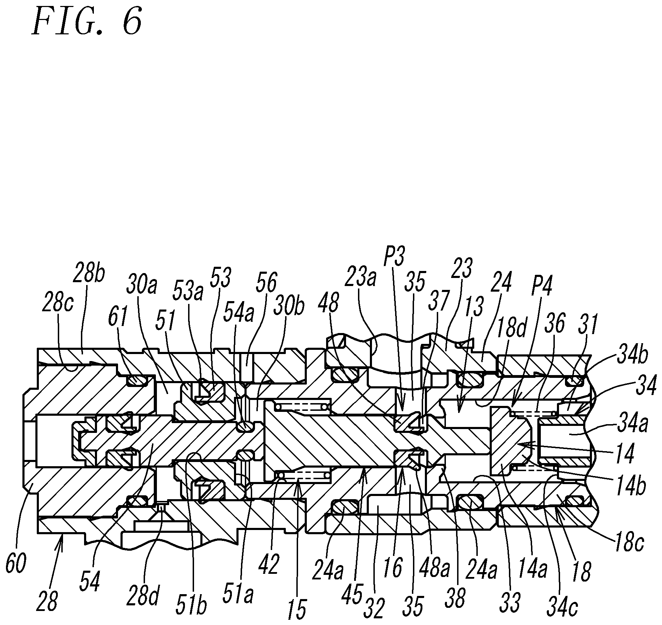

After the piston rod 54 is pressed, as illustrated in Fig. 6, the piston rod 54 moves toward the base end side in the direction of the axis L1, and the piston 51 and the push rod 45 also move toward the base end side in the direction of the axis L1. Then, the piston 51 abuts on the leading end portion of the body 18 in the axis direction and is prevented from moving. In addition, the push rod 45 moves toward the base end side in the direction of the axis L1 with respect to the piston 51 and moves the check valve element 14, via the push rod 45, to a second releasing position P4 located further toward the base end side in the direction of the axis L1 than the first releasing position P1. In addition, at the same time, the seal member 48 moves to the central hole 37. As a result, while the check valve element 14 is separated from the valve seat 38 and releases the main path 13, the seal member 48 releases the residual pressure exhaust path 15. Therefore, since the output port 12 is in communication with the pilot port 55 and the exhaust hole 56 through the main path 13 and the residual pressure exhaust path 15, the residual pressure in the head-side pressure chamber 88 of the fluid pressure cylinder 80 can be discharged to the outside through the first pilot check valve 10a. In addition, in the same manner as described above, the residual pressure in the rod-side pressure chamber 89 of the fluid pressure cylinder 80 can be discharged to the outside through the second pilot check valve 10b.

Note that in the pilot check valve 10 according to the present embodiment, the pilot body 28 having the pilot port 55 is rotatable around the axis L1 (X-axis) with respect to the body 18, the connecting pipe portion 23 is rotatable around the axis L1 with respect to the body 18, the annular body 25 is rotatable around the axis L3 (Y-axis) with respect to the connecting pipe portion 23, and the cylindrical coupling portion 22 is rotatable around the axis L2 (Z-axis) with respect to the main body 21. Therefore, the degree of freedom of arrangement directions of pipes to be connected to ports connected to these bodies can be enhanced.

### [Reference Signs List]

- 10, 10a, 10b: PILOT CHECK VALVE
- 11: INPUT PORT
- 12: OUTPUT PORT
- 13: MAIN PATH
- 14: CHECK VALVE ELEMENT
- 15: RESIDUAL PRESSURE EXHAUST PATH
- 18: BODY (FIRST BODY)
- 18d: THROUGH-HOLE
- 28e: OPENING PORTION (THIRD OPENING PORTION)
- 30: EXHAUST VALVE CHAMBER
- 30a: PRESSURE CHAMBER
- 30b: EXHAUST CHAMBER
- 32: FIRST ANNULAR PATH (FIRST OPENING PORTION)
- 34a: COMMUNICATION HOLE (SECOND OPENING PORTION)
- 36: FIRST RETURN SPRING
- 37: CENTRAL HOLE (CONNECTING PORTION)
- 45: PUSH ROD (OPERATION UNIT)
- 45d: RING GROOVE (SEAL PORTION, RECESSED GROOVE)
- 48: SEAL MEMBER (SEAL PORTION)
- 50: SECOND RETURN SPRING
- 51: PISTON
- 54: PISTON ROD
- 55: PILOT PORT
- 56: EXHAUST HOLE
- L1: FIRST AXIS (X-AXIS)
- P1: FIRST RELEASING POSITION
- P2: CHECK POSITION
- P3: RESIDUAL PRESSURE EXHAUST POSITION
- P4: SECOND RELEASING POSITION

## Claims

1. A pilot check valve (10, 10a, 10b) comprising:
A first body (18) that has an input port (11) and an output port (12);
a main path (13) that is provided in the first body (18) and is in communication with the input port (11) and the output port (12);
a check valve element (14) that is provided in the main path (13) and allows a flow of a pressure fluid from a first side of the main path (13) in communication with the input port (11) toward a second side of the main path (13) in communication with the output port (12), the check valve element (14) being selectively moveable, by discharge and supply of a pilot fluid, to a position where a flow from the output port (12) toward the input port (11) is blocked and respectively a position where the flow from the output port (12) toward the input port (11) is allowed;
a residual pressure exhaust path (15) having one end connected to a connecting portion (37) formed on the first side of the main path (13) and another end connected to an exhaust hole (56) provided and opened on the first body (18);
a seal portion (45d, 48) that is provided in the residual pressure exhaust path (15) and blocks a flow of a pressure fluid from the connecting portion (37) of the main path toward a side of the exhaust hole (56);
**characterized in that**
an operation unit (45) that is capable of moving the check valve element (14) to a position where a flow of a pressure fluid from the second side toward the first side in the main path (13) is allowed and moving the seal portion (45d, 48) to a position where the flow of a pressure fluid from the connecting portion (37) of the main path (13) in the residual pressure exhaust path (15) toward the exhaust hole (56) is allowed.

2. The pilot check valve (10, 10a, 10b) according to claim 1, wherein
the first body (18) extends in an axial direction, is formed into a cylindrical shape, and has a base end (18b) and a leading end (18a) at both ends in the axial direction,
the first body (18) has a through-hole (18d) that extends inside in the axial direction,
the first body (18) has a first opening portion (32) that opens in a middle portion of the first body (18) in the axial direction and that is in communication with the input port (11), and a second opening portion (34a) that opens in a base end portion of the first body (18) in the axial direction and that is in communication with the output port (12),
the check valve element (14) is supported and is movable in the axial direction in a base end portion in the axial direction of the through-hole (18d) extending in the axial direction, and
the operation unit (45) is accommodated in the through-hole (18d) further toward a leading end side than the check valve element (14) in the axial direction and is movable in the axial direction.

3. The pilot check valve (10, 10a, 10b) according to claim 2, wherein
the operation unit (45) is a rod member that extends along the through-hole (18d),
the rod member has an outer diameter that is smaller than an inner diameter of the through-hole (18d), and
the residual pressure exhaust path (15) is formed as a gap (43) formed between an outer peripheral surface of the rod member and an inner peripheral surface of the through-hole (18d).

4. The pilot check valve (10, 10a, 10b) according to claim 3, wherein
the seal portion (45d, 48) has a recessed groove (45d) that is formed into an annular shape on the outer peripheral surface of the rod member, and a seal member (48) that is accommodated in the recessed groove (45d), and
the seal member (48) is a lip-type seal member, the seal member (48) having a lip portion that is formed to be inclined outward in a radial direction toward a base end side in the axial direction.

5. The pilot check valve (10, 10a, 10b) according to claim 4, wherein
a part of the through-hole (18d) in communication with the first opening portion (32) and the second opening portion (34a) forms a part of the main path (13),
the base end portion in the axial direction of the through-hole (18d) extending in the axial direction has a valve seat (38) on which the check valve element (14) is capable of abutting, and
the check valve element (14) is capable of moving to a check position (P2) where the check valve element (14) abuts on the valve seat (38) and blocks a flow of a pressure fluid from the output port (12) toward the input port (11), and to a first releasing position (P1) where the check valve element (14) moves from the valve seat (38) toward a base end side in the axial direction and allows the flow of the pressure fluid from the output port (12) toward the input port (11).

6. The pilot check valve (10, 10a, 10b) according to claim 5, wherein
the rod member is capable of moving in the axial direction inside the through-hole (18d) by receiving a force toward a side of the check valve element (14),
when the seal member (48) is moved to a residual pressure exhaust position (P3) in the connecting portion (37), the flow of a pressure fluid from the connecting portion (37) of the main path (13) toward the exhaust hole (56) is allowed,
when the check valve element (14) is moved to a second releasing position (P4) further toward a base end side in the axial direction than the first releasing position (P1), the flow of a pressure fluid from the second side toward the first side in the main path (13) is allowed,
the rod member is capable of moving the seal member (48) to the residual pressure exhaust position (P3) by moving in the axial direction, and capable of moving the check valve element (14) to the second releasing position (P4).

7. The pilot check valve (10, 10a, 10b) according to claim 5 or 6, wherein
the check valve element (14) is provided with a first return spring (36) that biases the check valve element (14) toward a side of the valve seat (38), and
the rod member is provided with a second return spring (50) that biases the rod member toward a leading end side in the axial direction.

8. The pilot check valve (10, 10a, 10b) according to claim 6, wherein
the through-hole (18d) has an exhaust valve chamber (30) on a leading end side in the axial direction,
the exhaust valve chamber (30) is provided with a piston (51) inside the exhaust valve chamber (30), the piston (51) dividing the exhaust valve chamber (30) into a pressure chamber (30a) and a discharge chamber (30b) and being capable of sliding inside the through-hole (18d), and
the first body (18) has a pilot port (55) that introduces pilot pressure into the pressure chamber (30a), and the exhaust hole (56) that is located between the seal member (48) and the piston (51) and is in communication with the discharge chamber (30b) and an outside.

9. The pilot check valve (10, 10a, 10b) according to claim 8, wherein
the pilot check valve (10, 10a, 10b) further has a piston rod (54) that is disposed on a leading end side in the axial direction of the rod member and that is provided to be movable along the through-hole (18d),
the piston rod (54) has a base end portion in the axial direction inserted and movable in the axial direction with respect to the piston (51), and
when the piston rod (54) is pressed from a third opening portion (28e) that opens at the leading end in the axial direction of the first body (18) toward a base end side in the axial direction, the piston rod (54) is capable of pressing the rod member to move the rod member to the base end side in the axial direction and moving the seal member (48) to the residual pressure exhaust position (P3) and capable of moving the check valve element (14) to the second releasing position (P4).

10. The pilot check valve (10, 10a, 10b) according to any one of claims 2 to 9, wherein
when the axial direction is an X-axis direction, a direction orthogonal to the X-axis direction is a Z-axis direction, and a direction orthogonal to the X-axis direction and the Z-axis direction is a Y-axis direction,
the first body (18) extends in the X-axis direction,
the first body (18) is connected, on a base end side in the X-axis direction, to a second body (21) that extends in the Z-axis direction orthogonal to the X-axis direction and that includes the output port (12) at one end,
the first body (18) is connected, in a leading end portion in the X-axis direction, to a pilot body (28) that is fitted around an outer periphery of the first body (18) to be rotatable around the X-direction with respect to the first body (18),
the first body (18) is connected to a connecting pipe portion (23) that is fitted around an outer periphery of the first body and rotatable around the X-axis direction further toward a base end side in the X-axis direction than the pilot body (28),
the connecting pipe portion (23) is connected to an annular body (25) that is coupled and rotatable in the Y-axis direction orthogonal to the X-axis direction and the Z-axis direction, and
the second body (21) is connected to a cylindrical coupling portion (22) that is fitted to an outer periphery of the second body (21) and rotatable in the Z-axis direction and couples a base end portion of the first body (18) to the second body (21).

## Patentansprüche

1. Pilotrückschlagventil (10, 10a, 10b), umfassend:
einen ersten Körper (18), der einen Einlassanschluss (11) und einen Auslassanschluss (12) aufweist;
einen Hauptkanal (13), der in dem ersten Körper (18) vorgesehen ist und mit dem Einlassanschluss (11) und dem Auslassanschluss (12) in Verbindung steht;
ein Rückschlagventilelement (14), das im Hauptkanal (13) vorgesehen ist und einen Durchfluss eines Druckmediums von einer ersten Seite des Hauptkanals (13), die mit dem Einlassanschluss (11) in Verbindung steht, zu einer zweiten Seite des Hauptkanals (13), die mit dem Auslassanschluss (12) in Verbindung steht, ermöglicht, wobei das Rückschlagventilelement (14) durch Abgabe und Zufuhr eines Steuerfluids wahlweise in eine Position bewegbar ist, in der ein Durchfluss vom Ausgangsanschluss (12) zum Eingangsanschluss (11) gesperrt ist, bzw. in eine Position, in der der Durchfluss vom Ausgangsanschluss (12) zum Eingangsanschluss (11) zugelassen ist;
ein Restdruck-Ablasskanal (15), dessen eines Ende mit einem an der ersten Seite des Hauptkanals (13) ausgebildeten Verbindungsabschnitt (37) verbunden ist und dessen anderes Ende mit einer am ersten Körper (18) vorgesehenen und offenen Ablassöffnung (56) verbunden ist;
einen Dichtungsabschnitt (45d, 48), der im Restdruck-Ablasskanal (15) vorgesehen ist und einen Durchfluss eines Druckfluids vom Verbindungsabschnitt (37) des Hauptkanals in Richtung einer Seite der Ablassöffnung (56) sperrt;
**dadurch gekennzeichnet, dass**
eine Betätigungseinheit (45), die in der Lage ist, das Rückschlagventilelement (14) in eine Position zu bewegen, in der ein Fluss eines Druckfluids von der zweiten Seite zur ersten Seite im Hauptkanal (13) ermöglicht wird, und den Dichtungsabschnitt (45d, 48) in eine Position zu bewegen, in der der Fluss eines Druckmediums vom Verbindungsabschnitt (37) des Hauptkanals (13) im Restdruck-Entlüftungskanal (15) in Richtung der Entlüftungsöffnung (56) ermöglicht wird.

2. Pilotrückschlagventil (10, 10a, 10b) nach Anspruch 1, wobei
sich der erste Körper (18) in axialer Richtung erstreckt, zylindrisch geformt ist und an beiden Enden in axialer Richtung ein Basisende (18b) sowie ein vorderes Ende (18a) aufweist,
der erste Körper (18) eine Durchgangsbohrung (18d) aufweist, die sich in axialer Richtung im Inneren erstreckt,
der erste Körper (18) einen ersten Öffnungsabschnitt (32) aufweist, der sich in einem mittleren Abschnitt des ersten Körpers (18) in axialer Richtung öffnet und mit dem Einlassanschluss (11) in Verbindung steht, sowie einen zweiten Öffnungsabschnitt (34a), der sich in einem Basisendabschnitt des ersten Körpers (18) in axialer Richtung öffnet und mit dem Auslassanschluss (12) in Verbindung steht,
das Rückschlagventilelement (14) in einer in axialer Richtung verlaufenden Basisendabschnitt der sich in axialer Richtung erstreckenden Durchgangsbohrung (18d) gelagert und in axialer Richtung beweglich ist, und
die Betätigungseinheit (45) in der Durchgangsbohrung (18d) in axialer Richtung weiter in Richtung eines vorderen Endes als das Rückschlagventilelement (14) untergebracht und in axialer Richtung beweglich ist.

3. Pilotrückschlagventil (10, 10a, 10b) nach Anspruch 2, wobei
die Betätigungseinheit (45) ein Stangenelement ist, das sich entlang der Durchgangsbohrung (18d) erstreckt,
das Stangenelement einen Außendurchmesser aufweist, der kleiner ist als ein Innendurchmesser der Durchgangsbohrung (18d), und
der Restdruck-Entlüftungskanal (15) als Spalt (43) ausgebildet ist, der zwischen einer Außenumfangsfläche des Stangenelements und einer Innenumfangsfläche der Durchgangsbohrung (18d) gebildet wird.

4. Pilotrückschlagventil (10, 10a, 10b) nach Anspruch 3, wobei
der Dichtungsabschnitt (45d, 48) eine vertiefte Nut (45d) aufweist, die ringförmig an der Außenumfangsfläche des Stabelements ausgebildet ist, und ein Dichtungselement (48), das in der vertieften Nut (45d) aufgenommen ist, und
das Dichtungselement (48) ein lippenförmiges Dichtungselement ist, wobei das Dichtungselement (48) einen Lippenabschnitt aufweist, der so ausgebildet ist, dass er in radialer Richtung nach außen in Richtung einer Basisendseite in axialer Richtung geneigt ist.

5. Pilotrückschlagventil (10, 10a, 10b) nach Anspruch 4, wobei
ein Teil der Durchgangsbohrung (18d), der mit dem ersten Öffnungsabschnitt (32) und dem zweiten Öffnungsabschnitt (34a) in Verbindung steht, einen Teil des Hauptströmungswegs (13) bildet,
der in axialer Richtung verlaufende Basisendabschnitt der Durchgangsbohrung (18d) einen Ventilsitz (38) aufweist, an dem das Rückschlagventilelement (14) anliegen kann, und
das Rückschlagventilelement (14) in eine Rückschlagposition (P2) bewegbar ist, in der das Rückschlagventilelement (14) am Ventilsitz (38) anliegt und einen Fluss eines Druckfluids vom Ausgangsanschluss (12) zum Eingangsanschluss (11) blockiert, sowie in eine erste Freigabeposition (P1) bewegt werden kann, in der sich das Rückschlagventilelement (14) vom Ventilsitz (38) in Richtung einer Basisendseite in axialer Richtung bewegt und den Fluss des Druckfluids vom Ausgangsanschluss (12) zum Eingangsanschluss (11) zulässt.

6. Pilotrückschlagventil (10, 10a, 10b) nach Anspruch 5, wobei
das Stangenelement in der Lage ist, sich in axialer Richtung innerhalb der Durchgangsbohrung (18d) zu bewegen, indem es eine Kraft in Richtung einer Seite des Rückschlagventilelements (14) aufnimmt,
wenn das Dichtungselement (48) in eine Restdruck-Ablassposition (P3) im Verbindungsabschnitt (37) bewegt wird, der Durchfluss eines Druckmediums vom Verbindungsabschnitt (37) des Hauptkanals (13) in Richtung der Entlüftungsbohrung (56) ermöglicht wird,
wenn das Rückschlagventilelement (14) in eine zweite Freigabestellung (P4) bewegt wird, die in axialer Richtung weiter in Richtung der Basisendseite liegt als die erste Freigabestellung (P1), der Durchfluss eines Druckmediums von der zweiten Seite zur ersten Seite im Hauptkanal (13) ermöglicht wird,
das Stangenelement in der Lage ist, das Dichtungselement (48) durch Bewegung in axialer Richtung in die Restdruck-Entlüftungsposition (P3) zu bewegen, und in der Lage ist, das Rückschlagventilelement (14) in die zweite Freigabeposition (P4) zu bewegen.

7. Pilotrückschlagventil (10, 10a, 10b) nach Anspruch 5 oder 6, wobei
das Rückschlagventilelement (14) mit einer ersten Rückstellfeder (36) versehen ist, die das Rückschlagventilelement (14) in Richtung einer Seite des Ventilsitzes (38) vorspannt, und
das Stangenelement mit einer zweiten Rückstellfeder (50) versehen ist, die das Stangenelement in Richtung einer vorderen Endseite in axialer Richtung vorspannt.

8. Pilotrückschlagventil (10, 10a, 10b) nach Anspruch 6, wobei
die Durchgangsbohrung (18d) auf einer in axialer Richtung vorderen Seite eine Auslassventilkammer (30) aufweist,
die Auslassventilkammer (30) mit einem Kolben (51) innerhalb der Auslassventilkammer (30) versehen ist, wobei der Kolben (51) die Auslassventilkammer (30) in eine Druckkammer (30a) und eine Auslasskammer (30b) unterteilt und innerhalb der Durchgangsbohrung (18d) verschiebbar ist, und
der erste Körper (18) einen Pilotanschluss (55) aufweist, der Vorsteuerdruck in die Druckkammer (30a) einleitet, und die Auslassöffnung (56), die sich zwischen dem Dichtungselement (48) und dem Kolben (51) befindet und mit der Entlastungskammer (30b) sowie der Außenumgebung in Verbindung steht.

9. Pilotrückschlagventil (10, 10a, 10b) nach Anspruch 8, wobei
das Pilotrückschlagventil (10, 10a, 10b) ferner eine Kolbenstange (54) aufweist, die an einer in axialer Richtung des Stangenelements vorderen Endseite angeordnet ist und entlang der Durchgangsbohrung (18d) beweglich ausgebildet ist,
die Kolbenstange (54) einen in axialer Richtung am hinteren Ende liegenden Abschnitt aufweist, der in das Kolbenelement (51) eingeführt und in axialer Richtung relativ zu diesem bewegbar ist, und
wenn die Kolbenstange (54) von einem dritten Öffnungsabschnitt (28e), der sich am vorderen Ende in axialer Richtung des ersten Körpers (18) öffnet, in Richtung des hinteren Endes in axialer Richtung gedrückt wird, die Kolbenstange (54) in der Lage ist, auf das Stangenelement zu drücken, um dieses in axialer Richtung zur Basisendseite zu bewegen, das Dichtungselement (48) in die Restdruck-Ablassposition (P3) zu bewegen und das Rückschlagventilelement (14) in die zweite Freigabeposition (P4) zu bewegen.

10. Pilotrückschlagventil (10, 10a, 10b) gemäß einem der Ansprüche 2 bis 9, wobei
wenn die axiale Richtung eine X-Achsen-Richtung ist, eine zur X-Achsen-Richtung orthogonale Richtung eine Z-Achsen-Richtung ist und eine zur X-Achsen-Richtung und zur Z-Achsen-Richtung orthogonale Richtung eine Y-Achsen-Richtung ist,
sich der erste Körper (18) in X-Achsenrichtung erstreckt,
der erste Körper (18) an einer in X-Achsenrichtung liegenden Basisendseite mit einem zweiten Körper (21) verbunden ist, der sich in der zur X-Achsen-richtung orthogonalen Z-Achsenrichtung erstreckt und an einem Ende den Auslassanschluss (12) aufweist,
der erste Körper (18) an einem vorderen Endabschnitt in X-Achsenrichtung mit einem Führungskörper (28) verbunden ist, der um einen Außenumfang des ersten Körpers (18) herum angebracht ist, um sich in X-Richtung relativ zum ersten Körper (18) drehen zu können,
der erste Körper (18) mit einem Verbindungsrohrabschnitt (23) verbunden ist, der um einen Außenumfang des ersten Körpers herum angebracht ist und um die X-Achse weiter in Richtung einer Basisendseite in der X-Achsenrichtung drehbar ist als der Führungskörper (28),
der Verbindungsrohrabschnitt (23) mit einem ringförmigen Körper (25) verbunden ist, der in der Y-Achsenrichtung - orthogonal zur X-Achsenrichtung und zur Z-Achsenrichtung - gekoppelt und drehbar ist, und
der zweite Körper (21) mit einem zylindrischen Kupplungsabschnitt (22) verbunden ist, der an einem Außenumfang des zweiten Körpers (21) angebracht und in der Z-Achsenrichtung drehbar ist und einen Basisendabschnitt des ersten Körpers (18) mit dem zweiten Körper (21) koppelt.

## Revendications

1. Clapet antiretour pilote (10, 10a, 10b) comprenant :
un premier corps (18) comportant un orifice d'entrée (11) et un orifice de sortie (12) ;
un trajet principal (13) disposé dans le premier corps (18) et en communication fluidique avec l'orifice d'entrée (11) et l'orifice de sortie (12) ;
un élément de clapet antiretour (14) disposé dans le trajet principal (13) et permettant un écoulement d'un fluide sous pression depuis un premier côté du trajet principal (13) en communication avec l'orifice d'entrée (11) vers un deuxième côté du trajet principal (13) en communication avec l'orifice de sortie (12), l'élément de clapet antiretour (14) étant déplaçable sélectivement, par la décharge et l'alimentation d'un fluide pilote, vers une position dans laquelle un écoulement depuis l'orifice de sortie (12) vers l'orifice d'entrée (11) est bloqué, et respectivement vers une position dans laquelle l'écoulement depuis l'orifice de sortie (12) vers l'orifice d'entrée (11) est permis ;
un trajet d'évacuation de pression résiduelle (15), dont une extrémité est reliée à une partie de raccordement (37) formée sur le premier côté du trajet principal (13) et une autre extrémité est reliée à un trou d'évacuation (56) disposé et débouchant sur le premier corps (18) ;
une partie d'étanchéité (45d, 48) disposée dans le trajet d'évacuation de pression résiduelle (15) et bloquant un écoulement d'un fluide sous pression depuis la partie de raccordement (37) du trajet principal vers un côté du trou d'évacuation (56) ;
**caractérisé en ce que**
une unité de commande (45) capable de déplacer l'élément de clapet antiretour (14) vers une position dans laquelle un écoulement d'un fluide sous pression depuis le deuxième côté vers le premier côté dans le trajet principal (13) est permis, et de déplacer la partie d'étanchéité (45d, 48) vers une position dans laquelle l'écoulement d'un fluide sous pression depuis la partie de raccordement (37) du trajet principal (13), dans le trajet d'évacuation de pression résiduelle (15), vers le trou d'évacuation (56) est permis.

2. Clapet antiretour pilote (10, 10a, 10b) selon la revendication 1, dans lequel
le premier corps (18) s'étend dans une direction axiale, présente une forme cylindrique et comporte une extrémité de base (18b) et une extrémité avant (18a) aux deux extrémités dans la direction axiale,
le premier corps (18) comporte un trou traversant (18d) s'étendant intérieurement dans la direction axiale,
le premier corps (18) comporte une première partie d'ouverture (32), laquelle débouche dans une partie centrale du premier corps (18) dans la direction axiale et communique avec l'orifice d'entrée (11), et une deuxième partie d'ouverture (34a), laquelle débouche dans une partie d'extrémité de base du premier corps (18) dans la direction axiale et communique avec l'orifice de sortie (12),
l'élément de clapet antiretour (14) est supporté et déplaçable dans la direction axiale dans une partie d'extrémité de base, dans la direction axiale, du trou traversant (18d) s'étendant dans la direction axiale, et
l'unité de commande (45) est reçue dans le trou traversant (18d) plus loin vers une extrémité avant que l'élément de clapet antiretour (14) dans la direction axiale, et est déplaçable dans la direction axiale.

3. Clapet antiretour pilote (10, 10a, 10b) selon la revendication 2, dans lequel
l'unité de commande (45) est un élément de tige s'étendant le long du trou traversant (18d),
l'élément de tige présente un diamètre extérieur inférieur à un diamètre intérieur du trou traversant (18d), et
le trajet d'évacuation de pression résiduelle (15) est formé comme un espace (43) formé entre une surface périphérique extérieure de l'élément de tige et une surface périphérique intérieure du trou traversant (18d).

4. Clapet antiretour pilote (10, 10a, 10b) selon la revendication 3, dans lequel
la partie d'étanchéité (45d, 48) comporte une rainure évidée (45d) présentant une forme annulaire sur la surface périphérique extérieure de l'élément de tige, et un élément d'étanchéité (48) reçu dans la rainure évidée (45d), et
l'élément d'étanchéité (48) est un élément d'étanchéité de type lèvre, l'élément d'étanchéité (48) comportant une partie de lèvre formée de manière à être inclinée vers l'extérieur dans une direction radiale vers un côté d'extrémité de base dans la direction axiale.

5. Clapet antiretour pilote (10, 10a, 10b) selon la revendication 4, dans lequel
une partie du trou traversant (18d) en communication avec la première partie d'ouverture (32) et la deuxième partie d'ouverture (34a) fait partie du trajet principal (13),
la partie d'extrémité de base, dans la direction axiale, du trou traversant (18d) s'étendant dans la direction axiale comporte un siège de clapet (38) contre lequel l'élément de clapet antiretour (14) peut buter, et
l'élément de clapet antiretour (14) peut se déplacer vers une position de retenue (P2) dans laquelle l'élément de clapet antiretour (14) bute contre le siège de clapet (38) et bloque un écoulement d'un fluide sous pression depuis l'orifice de sortie (12) vers l'orifice d'entrée (11), et vers une première position de libération (P1) dans laquelle l'élément de clapet antiretour (14) se déplace depuis le siège de clapet (38) vers un côté d'extrémité de base dans la direction axiale et permet l'écoulement du fluide sous pression depuis l'orifice de sortie (12) vers l'orifice d'entrée (11).

6. Clapet antiretour pilote (10, 10a, 10b) selon la revendication 5, dans lequel
l'élément de tige est capable de se déplacer dans la direction axiale à l'intérieur du trou traversant (18d) en recevant une force dirigée vers un côté de l'élément de clapet antiretour (14),
lorsque l'élément d'étanchéité (48) est déplacé vers une position d'évacuation de pression résiduelle (P3) dans la partie de raccordement (37), l'écoulement d'un fluide sous pression depuis la partie de raccordement (37) du trajet principal (13) vers le trou d'évacuation (56) est permis,
lorsque l'élément de clapet antiretour (14) est déplacé vers une deuxième position de libération (P4) plus loin vers un côté d'extrémité de base dans la direction axiale que la première position de libération (P1), l'écoulement d'un fluide sous pression depuis le deuxième côté vers le premier côté dans le trajet principal (13) est permis,
l'élément de tige est capable de déplacer l'élément d'étanchéité (48) vers la position d'évacuation de pression résiduelle (P3) en se déplaçant dans la direction axiale, et capable de déplacer l'élément de clapet antiretour (14) vers la deuxième position de libération (P4).

7. Clapet antiretour pilote (10, 10a, 10b) selon la revendication 5 ou 6, dans lequel
l'élément de clapet antiretour (14) est doté d'un premier ressort de rappel (36) sollicitant l'élément de clapet antiretour (14) vers un côté du siège de clapet (38), et
l'élément de tige est doté d'un deuxième ressort de rappel (50) sollicitant l'élément de tige vers un côté d'extrémité avant dans la direction axiale.

8. Clapet antiretour pilote (10, 10a, 10b) selon la revendication 6, dans lequel
le trou traversant (18d) comporte une chambre de clapet d'évacuation (30) sur un côté d'extrémité avant dans la direction axiale,
la chambre de clapet d'évacuation (30) est dotée d'un piston (51) à l'intérieur de la chambre de clapet d'évacuation (30), le piston (51) divisant la chambre de clapet d'évacuation (30) en une chambre de pression (30a) et une chambre de décharge (30b) et étant capable de coulisser à l'intérieur du trou traversant (18d), et
le premier corps (18) comporte un orifice pilote (55) introduisant une pression pilote dans la chambre de pression (30a), et le trou d'évacuation (56) situé entre l'élément d'étanchéité (48) et le piston (51) et en communication avec la chambre de décharge (30b) et un extérieur.

9. Clapet antiretour pilote (10, 10a, 10b) selon la revendication 8, dans lequel
le clapet antiretour pilote (10, 10a, 10b) comporte en outre une tige de piston (54) disposée sur un côté d'extrémité avant dans la direction axiale de l'élément de tige et conçue de manière à pouvoir se déplacer le long du trou traversant (18d),
la tige de piston (54) comporte une partie d'extrémité de base, dans la direction axiale, laquelle est insérée dans le piston (51) et déplaçable dans la direction axiale par rapport à celui-ci, et
lorsque la tige de piston (54) est poussée depuis une troisième partie d'ouverture (28e) débouchant au niveau de l'extrémité avant du premier corps (18), dans la direction axiale, vers un côté d'extrémité de base dans la direction axiale, la tige de piston (54) est capable de pousser l'élément de tige de manière à déplacer l'élément de tige vers le côté d'extrémité de base dans la direction axiale et à déplacer l'élément d'étanchéité (48) vers la position d'évacuation de pression résiduelle (P3), et capable de déplacer l'élément de clapet antiretour (14) vers la deuxième position de libération (P4).

10. Clapet antiretour pilote (10, 10a, 10b) selon l'une quelconque des revendications 2 à 9, dans lequel
lorsque la direction axiale est une direction d'axe X, une direction orthogonale à la direction d'axe X est une direction d'axe Z, et une direction orthogonale à la direction d'axe X et à la direction d'axe Z est une direction d'axe Y,
le premier corps (18) s'étend dans la direction d'axe X,
le premier corps (18) est relié, sur un côté d'extrémité de base dans la direction d'axe X, à un deuxième corps (21) s'étendant dans la direction d'axe Z orthogonale à la direction d'axe X et incluant l'orifice de sortie (12) à une extrémité,
le premier corps (18) est relié, dans une partie d'extrémité avant dans la direction d'axe X, à un corps pilote (28) ajusté autour d'une périphérie extérieure du premier corps (18) de manière à pouvoir tourner autour de la direction d'axe X par rapport au premier corps (18),
le premier corps (18) est relié à une partie de tuyau de raccordement (23), laquelle est ajustée autour d'une périphérie extérieure du premier corps et peut tourner autour de la direction d'axe X, plus loin vers un côté d'extrémité de base dans la direction d'axe X que le corps pilote (28),
la partie de tuyau de raccordement (23) est reliée à un corps annulaire (25) accouplé et apte à tourner dans la direction d'axe Y orthogonale à la direction d'axe X et à la direction d'axe Z, et
le deuxième corps (21) est relié à une partie d'accouplement cylindrique (22), laquelle est ajustée sur une périphérie extérieure du deuxième corps (21) et apte à tourner dans la direction d'axe Z et laquelle accouple une partie d'extrémité de base du premier corps (18) au deuxième corps (21).
